# EUROPEAN PATENT APPLICATION

(11) **EP 0 905 953 A2**
(43) Date of publication of application: **31.03.1999**
(21) Application number: 98307511.0
(22) Date of filing: 16.09.1998
(51) Int. Cl.: H04M 1/274

(54) **Telephone system equipped with a bar code reader for automated dialing and information transmission**

(30) Priority: 29.09.1997 US 940271
(71) Applicant: STMicroelectronics, Inc., Carrollton Texas 75006-5039 (US)
(72) Inventor: Colavin, Osvaldo, San Diego, CA 92122 (US)
(74) Representative: Palmer, Roger

(57) **Abstract**

A telephone system implementing a telephone bar code reader for dialing and information transmission over a telephone network. The major components of the present invention are a bar code scanner, controller ROM code to interpret the bar code reader output and generate appropriate DTMF pulses, and a means of triggering execution. A telephone system user points the bar code scanner at a bar code and activates a triggering device, such as a button or toggle, to trigger execution of the present invention. The bar code reader then scans the bar code information and the bar code reader input is interpreted and appropriate Dual-Tone Multi-Frequency (DTMF) pulses are transmitted over the telephone network.

## Description

The present invention relates generally to sending bar coded information over a telephone network, and more specifically to a telephone system equipped with a bar code reader to facilitate and speed up dialing of bar coded telephone numbers or send other bar coded information over a telephone network.

Existing telephones and fax machines can memorize telephone numbers and easily and quickly dial a memorized telephone number. The difficulty arises when a telephone user wants to dial a non-memorized telephone number, for example a telephone number from a yellow page listing in a telephone book. Considering that a typical telephone user does not memorize the entire telephone number, but rather only a part of it, a telephone user must look up a telephone number, memorize a portion of it, dial that portion of the telephone number, and then start again until the entire telephone number is dialed.

Another problem associated with a user dialing a non-memorized telephone number is that there are some users who find it difficult to dial a telephone number or are unable to use a standard telephone book. For instance, handicapped persons may find it difficult to dial a telephone number. Also, blind persons or those persons visually impaired may find it difficult to dial a telephone number or to use a standard telephone book to look up a non-memorized telephone number. Additionally, there are many persons who cannot easily read telephone numbers such as small children and the elderly. Accordingly, it is often impossible for a small child to dial a non-memorized telephone number in an emergency situation.

Existing telephones and fax machines are also currently used to transmit non-dialing information over a telephone network after a telephone connection has been established. In applications that allow a user to retrieve information over the telephone, confidential information such as identification or authentication information is generally manually entered by the user using a telephone keypad. Unfortunately, this technique is susceptible to a potential intruder gaining access to confidential information by snooping or eavesdropping on the telephone line. This problem is exasperated by the slow speed which confidential information is manually entered by the user using a telephone keypad.

Equipment other than telephones and fax machines are also currently used to transmit information. In the field of warehouse management, cordless or radio frequency bar code readers are commonly used to manage inventory. There are problems associated with using cordless or radio frequency bar code readers because they require specific equipment. Additionally, the working range of the cordless or radio frequency bar code readers are generally limited because the receiver must be within the limited transmission range of the transmitter.

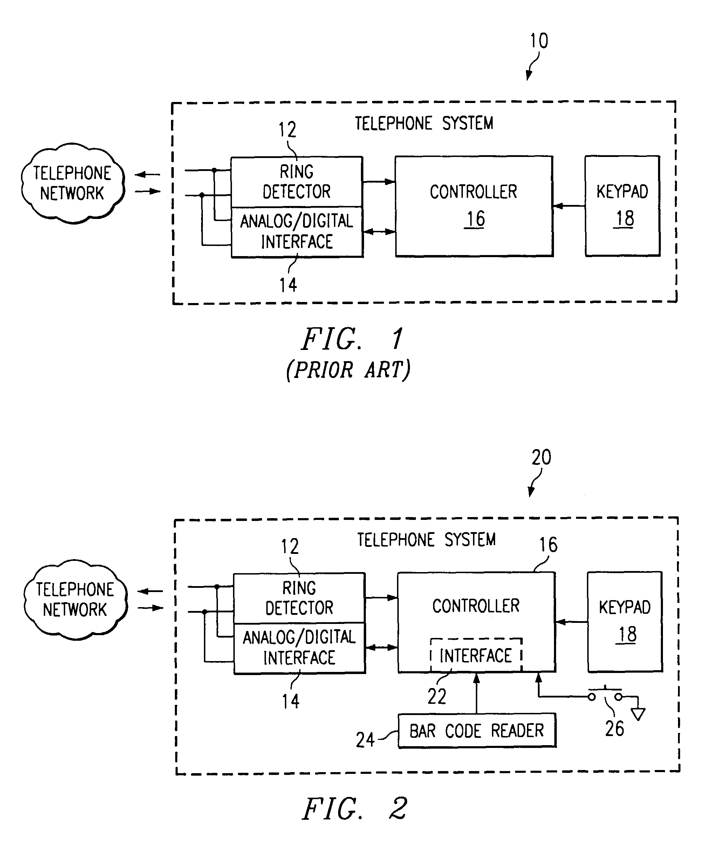

Referring to **Figure 1**, a block diagram of a telephone system according to the prior art is illustrated. A typical telephone system, as is well known in the art, comprises a ring detector 12, an analog or digital interface 14, a controller 16, and a keypad 18. As illustrated in Blocks 12 and 14, the ring detector 12 and the analog or digital interface 14 connect the telephone system to a telephone network. A telephone system user enters telephone information, including the telephone number, into the keypad 18. Read-Only Memory (ROM) code is contained within the controller 16 to control the execution and logic of the telephone system. A telephone system is typically integrated into a telephone frame as is well known in the art.

There is therefore an unmet need in the art to allow a telephone user to more easily and quickly dial a non-memorized telephone number in a telephone system. There is also an unmet need in the art to provide a more secure method of entering confidential information over a telephone system. Additionally, there is an unmet need in the art of transmitting inventory information that does not require specific equipment and is not limited in its working range.

It is therefore an object of the present invention to allow a telephone system user to more quickly and easily dial a non-memorized telephone number.

It is another object of the present invention to shorten the time required to transmit telephone information over a telephone network.

It is yet another object of the present invention to provide a more secure method of transmitting confidential information over a telephone network.

It is another object of the present invention to provide a method of inventory management over a telephone network.

Therefore, according to a preferred embodiment of the present invention, a telephone system implementing a telephone bar code reader for dialing and information transmission over a telephone network is disclosed. A telephone system user points the bar code scanner at a bar code and activates a triggering device, such as pressing and releasing a button or toggle, to trigger execution including: scanning a bar code with a bar code reader producing electrical pulses representative of the bar code; decoding the electrical pulses into characters of a telephonic character set; and generating appropriate Dual-Tone Multi-Frequency (DTMF) pulses representative of the characters of the telephonic character set over the telephone network.

The present invention is easily implemented within an existing telephone frame of a new telephone or fax machine. An interface is added to the controller of the telephone or fax machine to process the input from the bar code reader. The bar code scanner could be integrated into the handset or could be separate from the headset, such as a wand in the manner that is well known in the art. Code is integrated into the telephone controller's ROM to interpret the bar code reader input and to generate appropriate Dual-Tone Multi-Frequency (DTMF) pulses. It is also possible to add the present invention to an existing telephone or fax by inserting a hardware unit, including a bar code reader and a DTMF pulse generator, between the telephone jack and the existing telephone or fax.

Applications of the present invention include shortening the time required to dial a non-memorized telephone number in a telephone system, assisting those persons unable to use an existing standard telephone book, providing an easier and more secure means of transmitting credit card information and other confidential information over the telephone, and allowing companies to offer new and improved services to their customers.

These and other objects of the invention will become apparent from the detailed description of the invention in which numerals used throughout the description correspond to those found in the drawing figures.

The novel features believed characteristic of the invention are set forth in the appended claims. The invention itself, however, as well as a preferred mode of use, and further objects and advantages thereof, will best be understood by reference to the following detailed description of an illustrative embodiment when read in conjunction with the accompanying drawings, wherein:
**Figure 1** is a block diagram of a telephone system, according to the prior art;
**Figure 2** is a block diagram for implementing a telephone bar code reader for dialing a telephone number in a telephone system, according to the present invention;
**Figure 3** is a flow chart of a mode of operation implementing a telephone bar code reader for transmitting telephone information over a telephone network, according to the present invention;
**Figure 4** is a flow chart of a mode of operation implementing a telephone bar code reader for transmitting telephone information over a telephone network, according to an alternate embodiment of the present invention;
**Figure 5** is a flow chart illustrating the translation of electrical pulses from a bar code reader into DTMF pulses over a telephone network, according to the present invention; and
**Figure 6** is a flow chart illustrating data type handling, according to the present invention.

The present invention describes a bar code reader implementation for information transmission over a telephone network. The major components of the present invention are a bar code scanner, controller ROM code to interpret the bar code reader output and generate DTMF pulses, and a means of triggering execution of the present invention. The present invention is easily implemented within an existing telephone frame of a new telephone or fax machine. An interface is added to process the input from the bar code reader to the controller. The bar code scanner could be integrated into the handset or be separate from the headset, such as a wand as is well known in the art. Code is integrated into the telephone controller's ROM to interpret the bar code reader input and generate appropriate Dual-Tone Multi-Frequency (DTMF) pulses. The code necessary to interpret the bar code reader is of the type well known in the art. It is also possible to add the present invention to an existing telephone by inserting a hardware unit between the telephone jack and the phone. Thus, the present invention is compatible with any existing telephone or fax system. The added hardware would include a bar code reader and controller ROM code to interpret the bar code reader output and generate appropriate DTMF pulses

A standard telephone system keypad includes the zero through nine digits and the pound and asterisk symbols which are used to connect and transmit information over a telephone network. The character set associated with standard telephone systems must therefore include the zero through nine digits and the pound and asterisk symbols. Other symbols that are desirable to be used by the present invention include a pause symbol to force a pause between transmission of information and a data type used as a prefix to indicate if the encoded number must be interpreted as a phone number or rather as plain data, such as a credit card number, which should be transmitted as is without further processing.

Information that is transmitted over a telephone network using a telephone keypad may be comprised of any combination of keypad presses and is therefore generally variable in length. For instance, a user entering a local telephone number for dialing purposes may utilize only seven digits, a user entering a remote telephone number for dialing purposes may utilize ten or more digits, and a user entering telephone information not used for dialing purposes may utilize any number of keypad combinations. A number of standards are well known in the current art for encoding numbers into bar codes that could be used in the present invention to encode variable length telephone information. Alternatively, a new standard could be implemented to take advantage of the limited character set associated with standard telephone systems, the zero through nine digits and the plus and asterisk symbols, for compactness and/or reliability.

Three types of scanners are well known in the art. A wand scanner is the least expensive scanner, but requires the user to move the wand across the bar code. It is thus the least practical from a user perspective. A CCD scanner is more expensive but very efficient without requiring movements from the user. The CCD scanner is a point-and-shoot scanner, but the width of the bar code is limited to the scanner aperture. A laser scanner is the most expensive and most efficient scanner. It has moving parts and is easier to break, but can read a bar code even if the bar code is slanted or on a tilted axis relative to the laser scanner. The present invention may be operatively configured with any scanner ;

Referring to **Figure 2**, a block diagram for implementing a telephone bar code reader for dialing a telephone number in a telephone system 20 according to the present invention is illustrated. As illustrated in Blocks 22 through 26, an interface 22, a bar code reader 24, and a triggering device 26 are added to the telephone system known in the prior art shown in Figure 1. Interface 22 is used to interconnect bar code reader 24 to controller 16. Interface 22 processes the input from the bar code reader 24, and may be either internal or external to controller 16. Trigger device 26 may be any device, such as a button or a toggle, that is capable of triggering execution that includes: scanning a bar code with a bar code reader 24 producing electrical pulses representative of the bar code; decoding the electrical pulses into characters of a telephonic character set; and generating DTMF pulses representative of the characters of the telephonic character set over the telephone network.

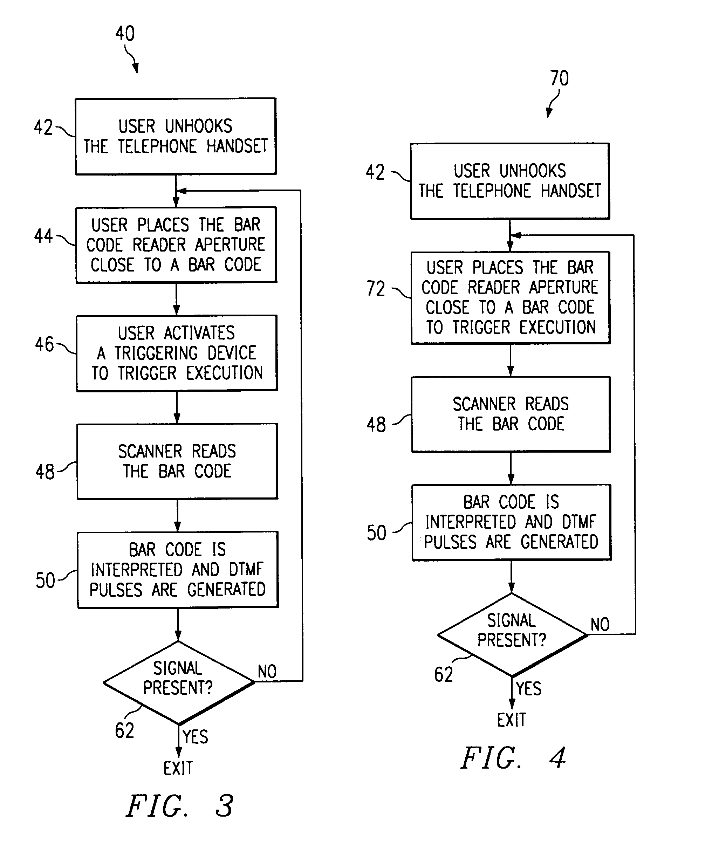

Referring to **Figure 3**, a flow chart of a mode of operation 40 implementing a telephone bar code reader for transmitting telephone information over a telephone network according to the present invention is illustrated. In Block 42, the telephone system user unhooks the handset. As illustrated in Blocks 44 and 46, the telephone system user points the scanner at a bar code 44 and activates a triggering device 46, such as pressing and releasing a button or toggle, to trigger execution of Blocks 48 through 62. In Block 48, the bar code reader scans the bar code information. In Block 50, code in the controller's ROM is executed to interpret the bar code reader output and generate appropriate Dual-Tone Multi-Frequency (DTMF) pulses. The bar code reader sends successive electrical impulses characteristic of the bar code which is translated by the controller's ROM code into a number or symbol using an encoding standard that is well known in the art. The telephone information is then transmitted over the telephone network. The telephone system user is signaled, either visually or audibly, that Blocks 42 through 50 were completed successfully. Successful completion indicates that the bar code reader properly scanned the bar code; the bar code reader properly scanned the bar code producing electrical pulses representative of the bar code; the electrical pulses were decoded into characters of a telephonic character set; and appropriate DTMF pulses representative of the characters of the telephonic character set were generated over the telephone network. As illustrated in Decision Block 62, if the telephone system user does not receive a visual or audible signal indicating a successful transmission, then Blocks 44 through 62 are repeated. Otherwise, the bar code information was successfully transmitted and the operation ends.

Referring to **Figure 4**, a flow chart of a mode of operation 70 implementing a telephone bar code reader for transmitting telephone information over a telephone network according to an alternate embodiment of the present invention is illustrated. As illustrated in Block 72, the telephone system user points the scanner at a bar code which automatically triggers execution as previously described in Figure 3. Triggering execution of the present invention as described in Block 72 includes Blocks 48 and 50. This may be accomplished by using a button or toggle with a lock position such that the scanner transmits continuously when the button or toggle is locked in the transmit position or by removing the button or toggle entirely such that the scanner always transmits continuously.

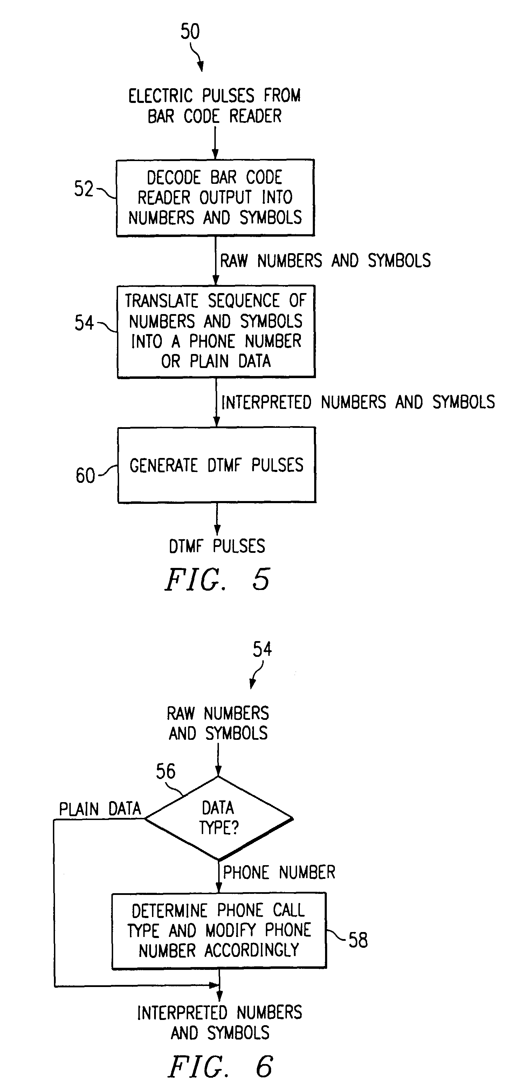

Referring to **Figure 5**, a flow chart 50 illustrating the translation of electrical pulses from a bar code reader into DTMF pulses over a telephone network according to the present invention is illustrated. In Block 52, the electrical pulses from the bar code reader is decoded into characters of a telephonic character set containing numbers and symbols. Next, as illustrated in Block 54, the sequence of numbers and symbols are interpreted into either a telephone number or plain data. DTMF pulses, consisting of numbers, symbols, and pauses, are generated and transmitted over the telephone network as illustrated in Block 60.

Referring to **Figure 6**, a flow chart illustrating data type handling 54 according to the present invention is illustrated. As illustrated in Decision Block 56, the data type of the number and symbols is determined based on the content. As previously described, a data type symbol is desirable to be used by the present invention as a prefix to indicate if the encoded number must be interpreted as a phone number or rather as plain data. If a data type symbol is encountered then the data type is determined as described in Decision Block 56. If the data type is plain data, then execution continues with no translation. Plain data is defined as telephone data that is not used for dialing purposes, such as credit card information, confidential information, or any other telephone data that is transmitted over the telephone after a telephone connection is established. If the data type is a phone number, then execution continues at Block 58. In Block 58, the telephone number may be translated, as required, such as adding a prefix. Examples of translation include: prefixing the telephone number with a 1 for long distance calls; removing the area code if the telephone is a local call; prefixing the telephone number with international information; prefixing the telephone call with billing information or a telephone carrier number; and prefixing the telephone call with an outside access number, such as 9, for large internal phone systems. The data required for translation could be coded into the telephone controller's ROM by the user.

Implementing a bar code reader for dialing and information transmission over a telephone network has many applications. Applications of the present invention include shortening the time required to dial a non-memorized telephone number in a telephone system, assisting those persons unable to use an existing standard telephone book, providing an easier and more secure means of transmitting credit card information and other confidential information over the telephone, and allowing companies to offer new and improved services to their customers.

An application of this invention of automated telephone dialing is to add telephone bar code information to a business listing in the yellow pages or business white pages of a telephone book for a fee. A company or contractor with a telephone bar code printed in the yellow pages or business white pages of a telephone book would be at an advantage over its competitors if their number could be dialed more easily. Additionally, telephone bar code information could be added to business cards making a rolodex even more convenient. It could also be added to any printed advertisement such as a leaflet, magnet, or newspaper.

The present invention is particularly useful to assist those persons who find it difficult to dial a telephone number or are unable to use a standard telephone book. For instance, the present invention would assist a handicapped person whom otherwise would find it difficult to dial a telephone number. The present invention would also allow a blind person or a person visually impaired to dial a non-memorized telephone number using a telephone book that contains telephone bar code information. The present invention would also be useful for those persons who cannot easily read telephone number such as small children. This would allow small children to dial non-memorized telephone numbers in an emergency situation.

Another application of this invention is the transmission of credit card information and other confidential information over the telephone. Telephone credit card transactions could be automated using the present invention by adding bar code information to the credit card. Automating credit card transactions would save a telephone system user time, eliminate manual entry, and thus reduce the number of errors associated with manual entry. Telephone companies also benefit from the time saving advantage, because shorter telephone calls mean that their equipment can serve more calls over a given period of time, which reduces the cost of their telephone equipment investment. In applications that allow a user to retrieve information over the telephone, confidential information such as identification or authentication information is generally manually entered by the user using a telephone keypad. Confidential information or passwords could be encoded into a bar code and transmitted more quickly over the telephone for authentication. This would reduce the chance of an intruder snooping or eavesdropping to gain confidential information or passwords typed over the telephone, as is a problem in the current art. Thus the present invention alone or used in combination with other methods could increase security during transmission of authentication information.

The present invention allows companies to offer new and improved services to their customers. For instance, a customer could use a bar code printed on a bill to determine if the bill was paid. Using the present invention, a bar code printed on a plane ticket could be used to automate confirmation on international flights. In the field of warehouse management, cordless or radio frequency bar code readers are commonly used to manage inventory. The present invention uses a standard telephone system and may be used to replace cordless or radio frequency bar code readers.

While the invention has been particularly shown and described with reference to a preferred embodiment, it will be understood by those skilled in the art that various changes in form and detail may be made therein without departing from the spirit and scope of the invention.

## Claims

1. A method for transmission of information over a telephone network by translating electrical pulses from a bar code reader into dual tone multi-frequency (DTMF) pulses, comprising:
a) scanning a bar code with a bar code reader to generate a plurality of electrical pulses representative of information contained within the bar code;
b) decoding the plurality of electrical pulses into a plurality of characters of a telephonic character set; and
c) generating a plurality of DTMF pulses representative of the plurality of characters of the telephonic character set, thereby transmitting the plurality of DTMF pulses over the telephone network.

2. The method of claim 1, wherein before scanning the bar code with the bar code reader to generate the plurality of electrical pulses representative of information contained within the bar code, further comprising:

3. A method for transmission of information over a telephone network by translating electrical pulses from a bar code reader into dual tone multi-frequency (DTMF) pulses, comprising:
a) scanning a bar code with a bar code reader to generate a plurality of electrical pulses representative of information contained within the bar code;
b) decoding the plurality of electrical pulses into a plurality of characters of a telephonic character set;
c) translating the plurality of characters of the telephonic character set into a plurality of interpreted characters; and
d) generating a plurality of DTMF pulses representative of the plurality of interpreted characters of the telephonic character set, thereby transmitting the plurality of DTMF pulses over the telephone network.

4. The method of claim 1 or 3, wherein decoding the plurality of electrical pulses into the plurality of characters of the telephonic character set and generating the plurality of DTMF pulses are performed by a controller.

5. The method of claim 3, wherein translating the plurality of characters of the telephonic character set into the plurality of interpreted characters, comprises:
determining whether each of the characters of the plurality of characters of the telephonic character set is a telephone number or plain data based on a data type; and
translating each of the plurality of characters of the telephonic character set that is determined to be a telephone number.

6. The method of claim 3, wherein before scanning the bar code with the bar code reader to generate the plurality of electrical pulses representative of information contained within the bar code, further comprising:
activating a triggering device to trigger execution of elements a, b, c, and d.

7. The method of claims 2 or 6, wherein activating a triggering device is by means of pressing and releasing either a button or a toggle.

8. The method of claims 1, 2, 3 or 6, wherein after generating a plurality of DTMF pulses representative of the plurality of characters of the telephonic character set, further comprising:
indicating to a user whether elements a, b, and c were successful.

9. The method of claims 1 or 8, wherein generating a plurality of DTMF pulses representative of the plurality of characters of the telephonic character set comprises either dialing a telephone number or transmitting plain data.

10. A bar code interface of a telephone system, comprising:
a controller;
a bar code reader; and
an interface that operatively couples the controller to the bar code reader, wherein the bar code reader generates a plurality of electrical pulses representative of the information contained within a bar code and provides the plurality of electrical pulses to the controller which decodes the plurality of electrical pulses into a plurality of characters of a telephonic character set and generates a plurality of DTMF pulses representative of the plurality of characters of a telephonic character set.

11. The bar code interface of claim 10 further comprising:
a triggering device, operatively coupled to the interface, wherein activation the triggering device commences execution.
